# EUROPEAN PATENT APPLICATION

(11) **EP 4 040 828 A1**
(43) Date of publication of application: **10.08.2022**
(21) Application number: 19947439.6
(22) Date of filing: 04.10.2019
(51) Int. Cl.: H04W 16/14, H04W 72/04

(54) **TERMINAL AND COMMUNICATION METHOD**

(71) Applicant: NTT DOCOMO, INC., Chiyoda-Ku Tokyo 100-6150 (JP)
(72) Inventor: KUMAGAI, Shinya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2019/039410
(87) International publication number: WO 2021/065016

(57) **Abstract**

A terminal includes: a reception unit configured to monitor a search space of a downlink control channel; and a control unit configured to switch from a first search space to a second search space upon detection of the downlink control channel, and switch from the second search space to the first search space upon determining that a signal transmission by a base station is completed, wherein a period of a time domain of the second search space is longer than that of the first search space.

## Description

### [Technical Field]

The present invention relates to a terminal and a communication method in a wireless communication system.

### [Background Art]

In NR (New Radio) (also referred to as "5G"), which is a successor system to the Long Term Evolution (LTE), considerations are made for technologies that satisfy requirements such as high capacity systems, a high data transmission rate, low delay, simultaneous connection of multiple terminals, low cost, power saving, and the like.

Further, existing LTE systems support the use of frequency bands (unlicensed bands) that are different from the frequency bands (licensed bands) licensed to telecom carriers (operators), unlicensed carriers, and unlicensed CCs, in order to expand the frequency bands. Examples of unlicensed bands include the a 2.4-GHz band, a 5-GHz band, or a 6-GHz band where Wi-Fi (registered trademark) or Bluetooth (registered trademark) can be used.

Specifically, Rel-13 supports Carrier Aggregation (CA), which integrates the carrier (CC) of the licensed band and the carrier (CC) of the unlicensed band. Communication performed using an unlicensed band together with a license band is referred to as License-Assisted Access (LAA).

In a wireless communication system that communicates using an unlicensed band together with a license band, the base station apparatus (downlink) and user terminal (uplink) perform channel sensing (carrier sensing) to confirm whether other apparatuses (e.g., a base station apparatus, a user terminal, a Wi-Fi device, etc.) are performing transmission, prior to transmitting data in the unlicensed band. As a result of the sensing, when it is confirmed that other apparatuses are not performing transmission, a transmission opportunity can be obtained and transmission can be performed. This operation is referred to as Listen Before Talk (LBT). Also, in NR, the system that supports the unlicensed band is referred to as the NR-U system.

### [Citation List]

### [Non-Patent Literature]

[NPTL 1]
   3GPP TS 38.331 V15.6.0 (2019-06)
[NPTL 2]
   3GPP TS 38.212 V15.6.0 (2019-06)
[NPTL 3]
   3GPP TS 38.213 V15.6.0 (2019-06)
[NPTL 4]
   3GPP TS 38.214 V15.6.0 (2019-06)

### [Summary of Invention]

### [Technical Problem]

In NR-U, GC (Group common)-PDCCH (Physical Downlink Control Channel) is supported. A DL burst is transmitted from a base station by GC-PDCCH. For PDCCH monitoring in the DL burst and PDCCH monitoring not in the DL burst, a search space is required to be switched to enhance the efficiency.

In view of the above, the present invention has an object to efficiently perform monitoring by switching search spaces in a wireless communication system.

### [Solution to Problem]

According to the disclosed technology, there is provided a terminal including: a reception unit configured to monitor a search space of a downlink control channel; and a control unit configured to switch from a first search space to a second search space upon detection of the downlink control channel, and switch from the second search space to the first search space upon determining that a signal transmission by a base station is completed, wherein a period of a time domain of the second search space is longer than that of the first search space.

### [Advantageous Effects of Invention]

According to the disclosed technology, a technique of efficiently performing monitoring by switching a search space in a wireless communication system is provided.

### [Brief Description of Drawings]

FIG. 1 is a diagram illustrating an example of a configuration of a wireless communication system according to an embodiment of the present invention.
FIG. 2 is a diagram for explaining a wireless communication system according to an embodiment of the present invention.
FIG. 3 is a diagram for explaining an example of monitoring
FIG. 4 is a sequence diagram for explaining an example of signaling according to an embodiment of the present invention.
FIG. 5 is a diagram for explaining an example (1) of monitoring according to an embodiment of the present invention.
FIG. 6 is a diagram for explaining an example (2) of monitoring according to an embodiment of the present invention.
FIG. 7 is a diagram illustrating an example of a functional configuration of a base station 10 according to an embodiment of the present invention.
FIG. 8 is a diagram illustrating an example of a functional configuration of a terminal 20 according to an embodiment of the present invention.
FIG. 9 is a diagram illustrating an example of a hardware configuration of the base station 10 or the terminal 20 according to an embodiment of the present invention.

### [Description of embodiment]

Hereinafter, embodiments of the present invention will be described with reference to the drawings. The embodiments described below are examples, and the embodiments to which the present invention is applied are not limited to the following embodiments.

In operations of the radio communication system of an embodiment of the present invention, the existing technology used as appropriate. The existing technology is, for example, existing LTE; however, the existing technology is not limited to the existing LTE. Furthermore, the term "LTE" used in the present specification has a broad meaning including LTE-Advanced and methods after LTE-Advanced (for example, NR), unless otherwise specified.

Furthermore, according to an embodiment of the present invention to be described below, terms such as SS (Synchronization Signal), PSS (Primary SS), SSS (Secondary SS), PBCH (Physical broadcast Channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc., used in the existing LTE, are used. This is for the sake of convenience of description, and signals, functions, etc., similar to these may be referred to by other names. Furthermore, the above terms in NR correspond to NR-SS, NR-PSS, NR-SSS, NR-PBCH, NR-PRACH, etc. However, a signal used in NR is not necessarily described as "NR-".

Furthermore, in the present embodiment, the duplex method may be the TDD (Time Division Duplex) method, the FDD (Frequency Division Duplex) method, or other methods (for example, the Flexible Duplex method).

Furthermore, in the embodiment of the present invention, the radio parameter, etc., being "set (configured)" means that a predetermined value is "pre-configured", or a radio parameter, which is indicated by a base station 10 or a terminal 20, is configured.

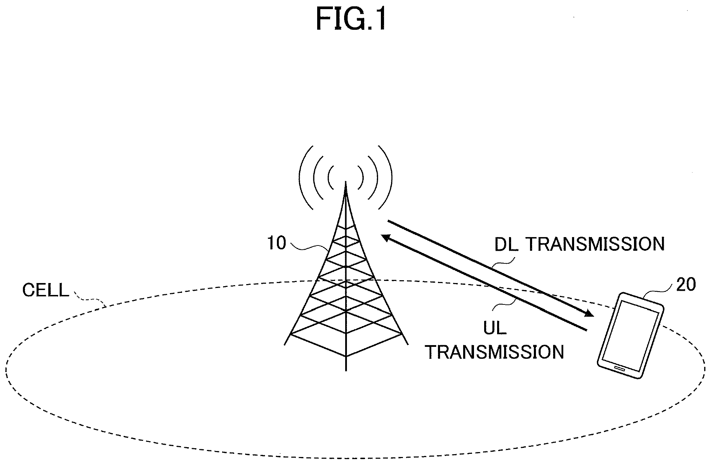

FIG. 1 is a diagram illustrating an example of a configuration of a wireless communication system according to an embodiment of the present invention. The wireless communication system according to an embodiment of the present invention includes the base station 10 and the terminal 20, as illustrated in FIG. 1. In FIG. 1, one base station 10 and one terminal 20 are illustrated, but this is an example and there may be more than one each.

The base station 10 is a communication apparatus that provides one or more cells and performs wireless communication with the terminal 20. The physical resources of the radio signal are defined in the time domain and the frequency domain, and the time domain may be defined in terms of the number of OFDM (Orthogonal Frequency Division Multiplexing) symbols, and the frequency domain may be defined in terms of the number of sub-carriers or the number of resource blocks. The base station 10 transmits synchronization signals and system information to the terminal 20. The synchronization signals are, for example, NR-PSS and NR-SSS. System information is transmitted, for example, by NR-PBCH, and is also referred to as broadcast information. As illustrated in FIG. 1, the base station 10 transmits a control signal or data to the terminal 20 by DL (Downlink) and receives a control signal or data by UL (Uplink) from the terminal 20. Both the base station 10 and the terminal 20 are capable of beam forming to transmit and receive signals. Both the base station 10 and the terminal 20 are also capable of applying MIMO (Multiple Input Multiple Output) communications to the DL or UL. Both the base station 10 and the terminal 20 may also communicate via a secondary cell (SCell: Secondary Cell) and a primary cell (PCell: Primary Cell) according to CA (Carrier Aggregation). Further, the terminal 20 may communicate via a primary cell of the base station 10 and a primary secondary cell (PSCell: Primary Secondary Cell) of another base station 10 according to DC(Dual Connectivity).

The terminal 20 is a communication apparatus with a wireless communication function, such as a smartphone, a cellular phone, a tablet, a wearable terminal, and a communication module for M2M (Machine-to-Machine). As illustrated in FIG. 1, the terminal 20 utilizes various communication services provided by the wireless communication system by receiving control signals or data by DL from the base station 10 and transmitting control signals or data by UL to the base station 10.

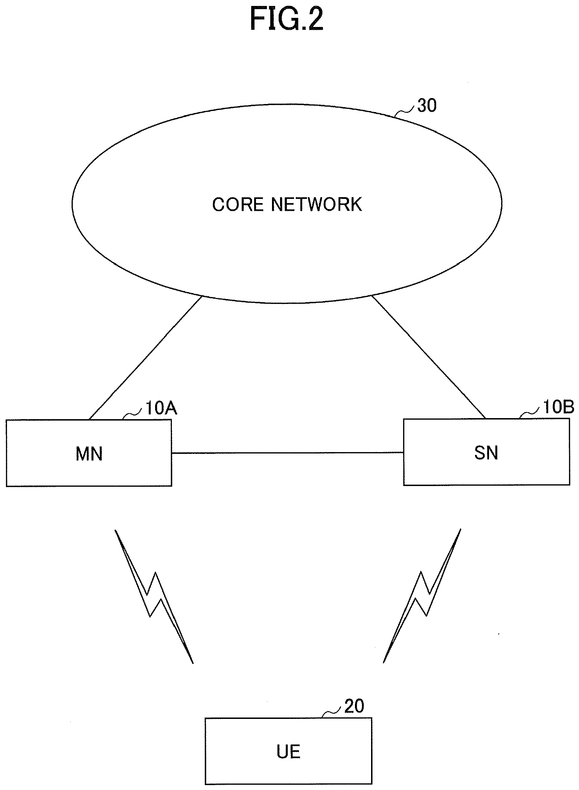

FIG. 2 is a diagram for explaining a wireless communication system according to an embodiment of the present invention. FIG. 2 illustrates an example of a configuration of a wireless communication system when NR-DC (NR-Dual connectivity) is executed. As illustrated in FIG. 2, a base station 10A serving as a MN (Master Node) and a base station 10B serving as a SN (Secondary Node) are provided. The base station 10A and the base station 10B are each connected to a core network 30. The terminal 20 communicates with both the base station 10A and the base station 10B.

The cell group provided by the base station 10A that is the MN is referred to as an MCG (Master Cell Group), and the cell group provided by the base station 10B that is the SN is referred to as an SCG (Secondary Cell Group). The operations described below may be performed by either one of the configurations of FIG. 1 and FIG. 2.

In the wireless communication system according to the present embodiment, the LBT described above is executed. The base station 10 or the terminal 20 acquires the COT (Channel Occupancy Time) and performs transmission when the LBT result is idle (when the LBT is successful), but does not perform transmission when the LBT result is busy (LBT-busy). That is, the base station 10 or the terminal 20 performs signal transmission within the COT.

The wireless communication system according to the present embodiment may perform a carrier aggregation (CA) operation using an unlicensed CC and a licensed CC, a dual connectivity (DC) operation using an unlicensed CC and a licensed CC, or a stand-alone (SA) operation using only an unlicensed CC. CA, DC, or SA may be performed by either one system of NR or LTE. DC may be performed by at least two systems of NR, LTE, and other systems.

The terminal 20 may assume the presence of a signal (for example, a reference signal (RS), such as Demodulation Reference Signal (DMRS)) in PDCCH or group common PDCCH (group common (GC)-PDCCH) to detect a transmit burst from the base station 10.

The base station 10 may transmit a specific PDCCH (PDCCH or GC-PDCCH) including a particular DMRS indicating the start of the COT at the start of the COT of the base station apparatus initiation event. At least one of a particular PDCCH and a particular DMRS may be referred to as a COT start indication signal. For example, the base station 10 may transmit a COT start indication signal to one or more terminals 20, and the terminal 20 may recognize the COT when a particular DMRS is detected.

In a monitoring operation of PDCCH in NR-U, for example, the presence of a signal such as a DMRS included in PDCCH or GC-PDCCH may be assumed in order to enable a power saving operation without blind decoding for detecting transmission burst. In addition, when preamble is transmitted at the top of the transmission burst, the power saving operation may be enabled. Other signals may also be used to detect transmission bursts. The transmission payload of PDCCH and/or GC-PDCCH may also include information regarding a COT structure and be used for the power saving operation of the terminal 20. The COT structure may be defined, for example, by the start time and end time at which a channel is occupied by a device and a signal is transmitted. Also, the COT structure may also include information indicative of a frequency domain at which a channel is arranged at the start time and end time at which the channel is occupied by a device and a signal is transmitted. The COT structure may also be defined, for example, by the start time and the end time at which the base station 10 transmits a signal. Hereinafter, the COT may be defined as or replaced with the time at which a device occupying the channel transmits the signal.

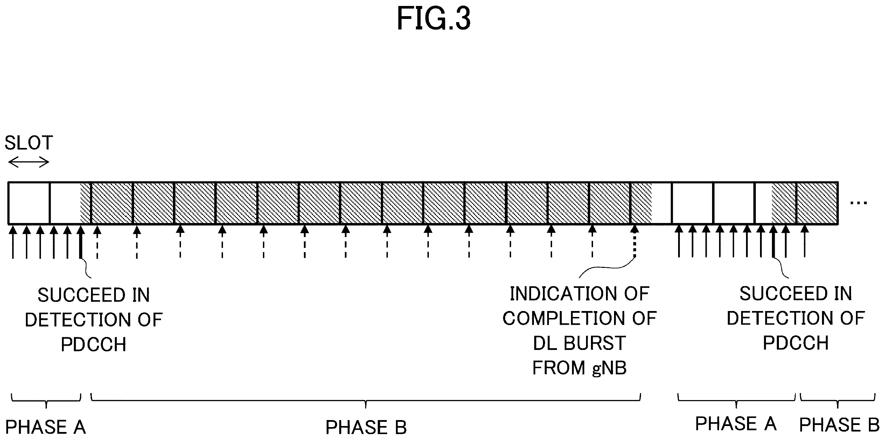

FIG. 3 is a diagram for explaining an example of monitoring. As illustrated in FIG. 3, Phase A and Phase B are defined for monitoring. Phase A and Phase B may be switched as appropriate (dynamic switching).

In phase A, for example, a search space (SS#1) for performing relatively frequent PDCCH monitoring in unit of mini-slot or the like is configured to the terminal 20. Switching from Phase A to Phase B occurs when the terminal 20 successfully detects PDCCH and/or GC-PDCCH.

In phase B, for example, a search space (SS#2) for performing normal PDCCH monitoring in unit of slot or the like is configured to the terminal 20. Switching from Phase B to Phase A occurs when the terminal 20 completes the DL burst transmission from the base station 10 based on the notification related to the COT structure. The period of SS#2 may be longer than that of SS#1.

Here, in NR, it is possible to configure monitoring of GC-PDCCH and it is possible to not configure monitoring of GC-PDCCH. For example, for the terminal 20 to which the monitoring of GC-PDCCH is configured, it is possible for the COT structure to be indicated by SFI (Slot format indicator) of the DCI format 2_0. On the other hand, for the terminal 20 to which the monitoring of GC-PDCCH is not configured, because it is impossible for the COT structure to be indicated by SFI of the DCI format 2_0, it is necessary to detect the end of a DL burst that is transmitted from the base station 10 by another means. That is, with respect to the terminal 20 to which GC-PDCCH is configured and the terminal 20 to which GC-PDCCH is not configured, it is necessary to define a dynamic switching operation for switching between Phase A and Phase B.

Thus, in NR-U, high frequency utilization efficiency and power consumption reduction are realized for each of the terminal 20 to which the GC-PDCCH is configured and the terminal 20 to which the GC-PDCCH is not configured. For example, to the terminal 20, search spaces having a plurality of different PDCCH monitoring periods and the presence/absence of GC-PDCCH transmission may be set. For example, the terminal 20 to which the presence of GC-PDCCH transmission is configured may switch GC-PDCCH may switch, based on the COT structure indicated by the GC-PDCCH, the search space to be applied. That is, the terminal 20 may switch, based on configuration information relating to PDCCH monitoring, the search space to be applied. For example, the terminal 20 to which the absence of GC-PDCCH transmission is configured or to which configuration relating to transmission of GC-PDCCH is not configured may switch, based on the detection result of PDCCH or the detection result of DMRS of PDCCH, the search space to be applied. That is, the terminal 20 may switch, based on the result of PDCCH monitoring, the search space to be applied.

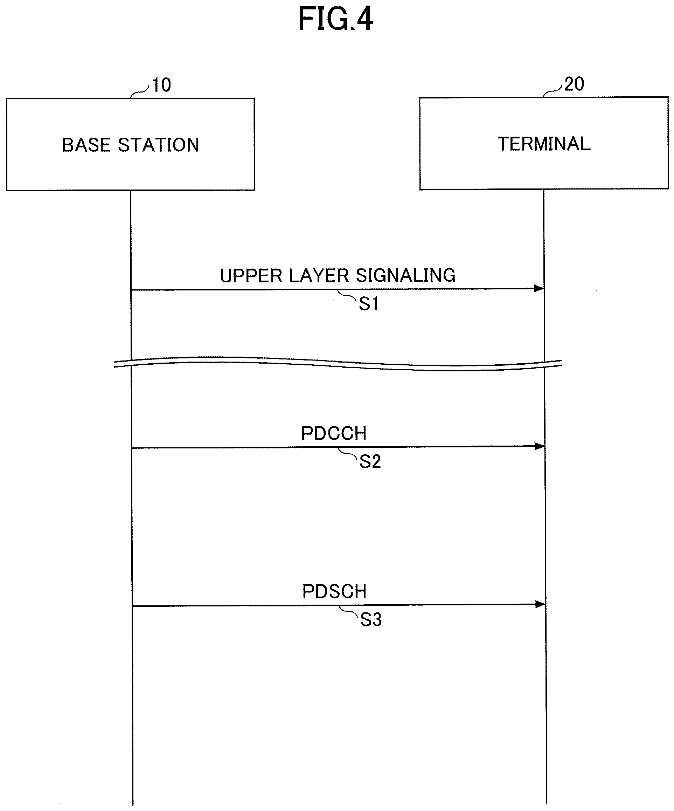

FIG. 4 is a sequence diagram for describing an example of signaling according to an embodiment of the present invention. The base station 10 may transmit a DL burst to the terminal 20.

In step S1, the base station 10 indicates, to the terminal 20, the configurations related to PDCCH monitoring via upper layer signaling. For example, a search space (SS) with multiple different PDCCH monitoring periods may be indicated to the terminal 20. Also, presence/absence of transmission of GC-PDCCH may be indicated to the terminal 20.

In step S2, the base station 10 transmits, to the terminal 20, DCI for scheduling PDSCH via PDCCH. The terminal 20 performs set PDCCH monitoring to detect PDCCH. The PDCCH that is transmitted from the base station 10 may configure a transmission burst. It should be noted that the terminal 20 may only detect DMRS of the PDCCH without receiving DCI.

In step S3, the terminal 20 receives data from the base station 10 via the PDSCH based on the received DCI. Step S3 need not be performed in a case in which the terminal 20 only detects DMRS of the PDCCH without receiving the DCI in step S2.

For example, in step S1, the presence of GC-PDCCH transmission is configured to the terminal 20A and the absence of GC-PDCCH transmission is configured to the terminal 20B. To the terminal 20B, a configuration relating to GC-PDCCH transmission need not be configured. Also, in Step S1, the search space SS#1 is the default of USS (UE-specific Search Space) and the search space SS#2 is the USS during the transmission period of serving gNB. The monitoring period of SS#1 may be shorter than the slot length. The monitoring period of SS#2 may be equal to the slot length.

Here, in the search space configuration, it is necessary to indicate which search space is SS#1 and which search space is SS#2 to the terminal 20A and the terminal 20B. It may be indicated by any method of 1)-4) below.
1) A search space whose monitoring period configured by the information element searchSpace is shorter than the slot length may be SS#1, and a search space whose monitoring period is equal to or more than the slot length may be SS#2.
2) As the information element for configuring the search space, a search space configured by searchSpaceOne is SS#1 and a search space configured by searchSpaceTwo is SS#2. The name of the information element is an example and may be another name.
3) When searchSpaceId included in the information element searchSpace is an even number, SS#1 may be set, and when it is an odd number, SS#2 may be set. Alternatively, when searchSpaceId is a specific number (e.g., 1), SS#1 may be set, and when it is another number, SS#2 may be used.
4) By searchSpaceType included in the information element searchSpace, whether the search space is SS#1 or SS#2 may be indicated. The name of the information element is an example and may be another name.

Here, in step S1, the terminal 20A for which the presence of GC-PDCCH transmission is configured may switch, based on the COT structure indicated by the GC-PDCCH, the search space to be applied. For example, the structure of the time domain of COT may be indicated to the terminal 20A by the DCI format 2_0.

For example, when the terminal 20A detects the DCI format 2_0 with a specific SFI designating a slot, the terminal 20A may determine that the designated slot is outside the COT. Alternatively, when the terminal 20A detects the CRC scrambled DCI format 2_0 by new RNTI instead of SFI-RNTI (Radio network Temborary identifier), the last slot indicated by the DCI format 2_0 may be determined to be the end of the COT. The terminal 20A monitors SS#1, but not SS#2, in slots after the end of the COT.

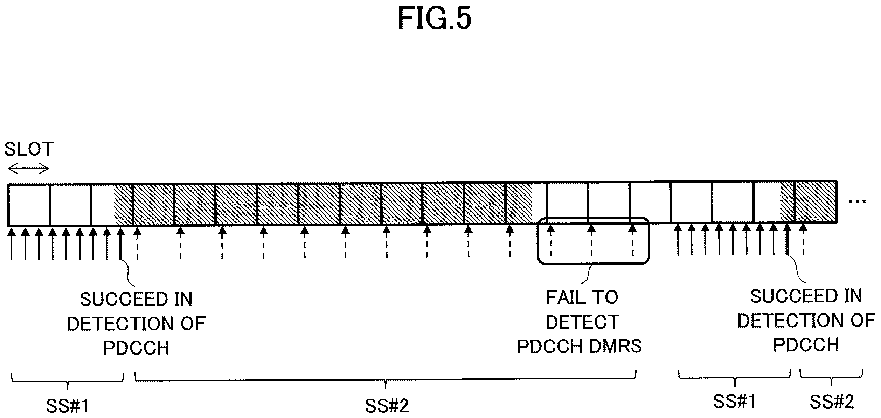

FIG. 5 is a diagram for explaining an example (1) of monitoring according to an embodiment of the present invention. In step S1, the terminal 20B for which the absence of GC-PDCCH transmission is configured or a configuration relating to GC-PDCCH transmission is not configured may switch the search space to be applied, based on the DMRS detection result of the PDCCH, as illustrated in FIG. 5. The terminal 20B may also switch the search space to be applied, based on the detection result of the PDCCH.

As illustrated in FIG. 5, when the terminal 20B successfully detects PDCCH during monitoring SS#1, the terminal 20B may switch to monitor SS#2. Furthermore, when failing to detect DMRS of the PDCCH n consecutive times during monitoring the SS#2, the terminal 20B may determine that the COT of the base station 10 has been completed and may switch to monitor the SS#1 not to monitor thee SS#2.

The n may be one or more. The n may be configured by upper layer signaling from the base station 10, or may be derived from the relationship between the monitoring start position of SS#2 and the position where the DMRS detection failed. For example, n = (maximum number of times of SS monitoring in COT) - (number of monitoring times of successfully detecting DMRS from the start of SS#2 monitoring to the failure of DMRS detection). It should be noted that FIG. 5 is an example in which n = 3.

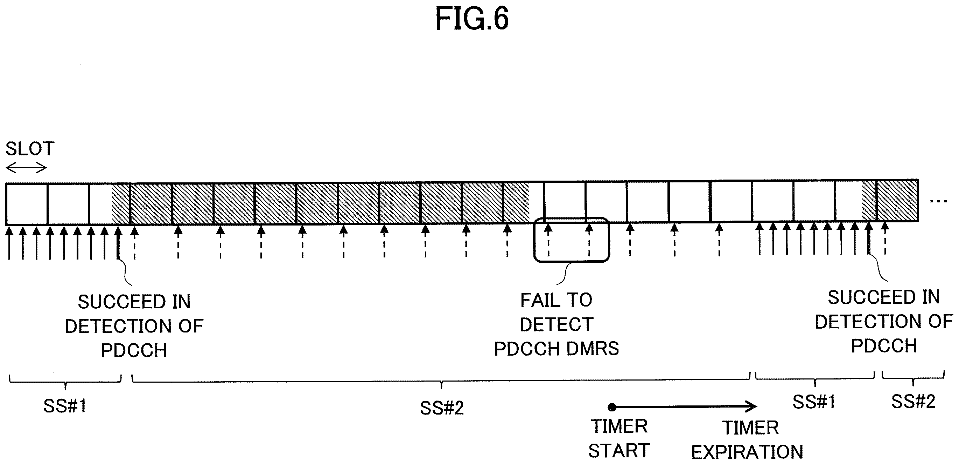

FIG. 6 is a diagram for explaining an example (2) of monitoring according to an embodiment of the present invention. As illustrated in FIG. 6, when failing to detect DMRS of the PDCCH n consecutive times, the terminal 20B starts the timer, determines that the COT of the base station 10 has been completed when the timer expires, and may switch to monitor the SS#1 rather than to monitor the SS#2.

The n and the timer expiration time may be configured by upper layer signaling. It should be noted that when the terminal 20B succeeds in DMRS detection of the PDCCH before the timer expires, the timer is stopped and initialized.

Also, the terminal 20B to which the absence of transmission of GC-PDCCH is configured or a configuration relating to transmission of GC-PDCCH is not configured may not assume switching of the search space. That is, only one search space may be settable to the terminal 20B, and when multiple search spaces are set, only the default search space may be applied.

Search space switching based on the COT structure indicated by the GC-PDCCH, search space switching based on the DMRS detection result of the PDCCH, and search space switching based on the detection result of the PDCCH may be indicated to the base station 10 as a single UE capability, or may be indicated to the base station 10 as the respective different UE capabilities. When being indicated to the base station 10 as the respective different UE capabilities, any one of the UE capabilities may be indicated as mandatory.

In accordance with the embodiment described above, the terminal 20 can monitor the PDCCH by switching the search space having a different monitoring period depending on the communication situation. That is, in NR-U, high frequency utilization efficiency and power consumption reduction are realized for each of the terminal 20 to which the GC-PDCCH is configured and the terminal 20 to which the GC-PDCCH is not configured.

That is, in the wireless communication system, it is possible to efficiently perform monitoring by switching the search space.

### (Apparatus configuration)

Next, a functional configuration example of the base station 10 and the terminal 20 that execute the above-described processes and operations, will be described. The base station 10 and the terminal 20 include functions for implementing the above-described embodiments. However, each of the base station 10 and the terminal 20 may have only some of the functions of the embodiments.

### <Base station 10>

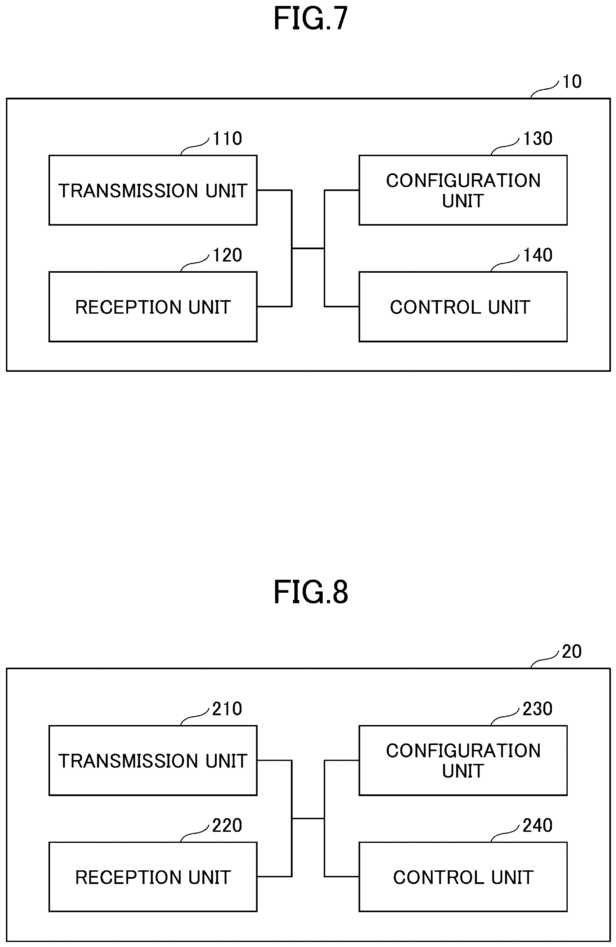

FIG. 7 is a diagram illustrating an example of a functional configuration of the base station 10 according to an embodiment of the present invention. As illustrated in FIG. 7, the base station 10 includes a transmission unit 110, a reception unit 120, a configuration unit 130, and a control unit 140. The functional configuration illustrated in FIG. 7 is only an example. As long as the operations according to the embodiment of the present invention can be executed, the functional division and the name of the functional unit may be any functional division and name.

The transmission unit 110 includes a function of generating signals to be transmitted to the terminal 20, and transmitting the signals in a wireless manner. Further, the transmission unit 110 transmits an inter-network node message to another network node. The reception unit 120 includes a function of receiving various signals transmitted from the terminal 20, and acquiring, for example, information of a higher layer from the received signals. Furthermore, the transmission unit 110 has a function of transmitting NR-PSS, NR-SSS, NR-PBCH, and DL/UL control signals, etc., to the terminal 20. Further, the reception unit 120 receives an inter-network node message from another network node.

The configuration unit 130 stores pre-configured configuration information and various kinds of configuration information to be transmitted to the terminal 20. The content of the configuration information is, for example, a configuration related to communication of NR-U.

As described in the embodiment, the control unit 140 performs control relating to UL grant. A functional unit related to signal transmission in the control unit 140, may be included in the transmission unit 110, and a functional unit related to signal reception in the control unit 140, may be included in the reception unit 120.

### <Terminal 20>

FIG. 8 is a diagram illustrating an example of a functional configuration of the terminal 20 according to an embodiment of the present invention. As illustrated in FIG. 8, the terminal 20 includes a transmission unit 210, a reception unit 220, a configuration unit 230, and a control unit 240. The functional configuration illustrated in FIG. 8 is only an example. As long as the operations according to the embodiment of the present invention can be executed, the functional division and the name of the functional unit may be any functional division and name.

The transmission unit 210 creates transmission signals from the transmission data and wirelessly transmits the transmission signals. The reception unit 220 wirelessly receives various kinds of signals and acquires signals of a higher layer from the received signals of the physical layer. Furthermore, the reception unit 220 has a function of receiving NR-PSS, NR-SSS, NR-PBCH, and DL/UL/SL control signals, etc., transmitted from the base station 10. Furthermore, for example, the transmission unit 210 may transmit as D2D communication, to another terminal 20, PSCCH (Physical Sidelink Control Channel), PSSCH (Physical Sidelink Shared Channel), PSDCH (Physical Sidelink Discovery Channel), and PSBCH (Physical Sidelink Broadcast Channel), etc., and the reception unit 220 may receive, from another terminal 20, PSCCH, PSSCH, PSDCH, or PSBCH, etc.

The configuration unit 230 stores various kinds of configuration information received from the base station 10, by the reception unit 220. Furthermore, the configuration unit 230 also stores pre-configured configuration information. The content of the configuration information is, for example, configurations related to NR-U communication.

As described in the embodiment, the control unit 240 performs control for monitoring PDCCH. A functional unit related to signal transmission in the control unit 240 may be included in the transmission unit 210, and a functional unit related to signal reception in the control unit 240 may be included in the reception unit 220.

### (Hardware configuration)

The block diagrams (FIG. 7 and FIG. 8) used for describing the embodiment described above are of blocks of functional units. These functional blocks (constituent units) are implemented by any combination of at least one of hardware and software. Methods for implementing each functional block are not particularly limited. That is, each functional block may be implemented by using one device in which elements are physically or logically combined, or two or more devices physically or logically separated may be directly or indirectly (for example, in a wired manner, a wireless manner) connected to each other, and each functional block may be implemented by these plural devices. The functional blocks may be implemented by combining software with the above one device or a plurality of devices.

The functions include determining, deciding, judging, calculating, computing, processing, deriving, investigating, searching, confirming, receiving, transmitting, outputting, accessing, resolving, selecting, adopting, establishing, comparing, assuming, expecting, considering, broadcasting, notifying, communicating, forwarding, configuring, reconfiguring, allocating, mapping, assigning, etc.; however, the functions are not limited as such. For example, a function block (constituent unit) that implements the transmission function is referred to as a transmission unit or a transmitter. In any case, as described above, the implementation method is not particularly limited.

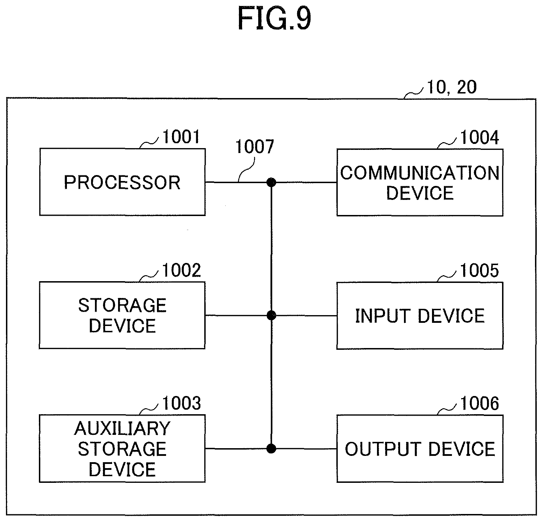

For example, the base station 10 and the terminal 20, etc., according to the embodiment of the present disclosure may function as a computer that performs processes of the radio communication method according to the present disclosure. FIG. 9 is a diagram illustrating an example of a hardware configuration of the base station 10 and the terminal 20 according to the embodiment of the present disclosure. The base station 10 and the terminal 20 described above may be formed as a computer apparatus physically including a processor 1001, a storage device 1002, an auxiliary storage device 1003, a communication device 1004, an input device 1005, an output device 1006, a bus 1007, etc.

Note that in the following description, the term "device" can be read as a circuit, a device, a unit. The hardware configuration of the base station 10 and the terminal 20 may be configured to include one or more devices illustrated in the figure, or may be configured to not include some of the devices.

The functions of the base station 10 and the terminal 20 are implemented by loading predetermined software (program) in hardware such as the processor 1001 and the storage device 1002, computing by the processor 1001, controlling communication by the communication device 1004, and controlling at least one of reading and writing of data in the storage device 1002 and the auxiliary storage device 1003.

The processor 1001 operates, for example, the operating system to control the entire computer. The processor 1001 may be formed of a central processing unit (CPU) including an interface with a peripheral device, a control device, an arithmetic device, and a register. For example, the above control unit 140 and the control unit 240, etc., may be implemented by the processor 1001.

Furthermore, the processor 1001 loads a program (program code), a software module, or data, etc., from at least one of the auxiliary storage device 1003 and the communication device 1004, into the storage device 1002, and executes various processes according to the program, the software module, or the data. As the program, a program for causing a computer to execute at least part of the operations described in the above embodiment is used. For example, the control unit 140 of the base station 10 illustrated in FIG. 7 may be implemented by a control program stored in the storage device 1002 and operating on the processor 1001. Furthermore, the control unit 240 of the terminal 20 illustrated in FIG. 8 may be implemented by a control program stored in the storage device 1002 and operating on the processor 1001. Although it has been described that the above-described various processes are executed by one processor 1001, the processes may be executed simultaneously or sequentially by two or more processors 1001. The processor 1001 may be implemented with one or more chips. Note that the program may be transmitted from the network via an electric communication line.

The storage device 1002 is a computer-readable recording medium and may be formed of at least one of a ROM (Read Only Memory), an EPROM (Erasable Programmable ROM), an EEPROM (Electrically Erasable Programmable ROM), and a RAM (Random Access Memory). The storage device 1002 may be referred to as a register, a cache, and a main memory, etc. The storage device 1002 can store executable programs (program codes), software modules, etc., for implementing the communication method according to the embodiment of the present disclosure.

The auxiliary storage device 1003 is a computer-readable recording medium, and may be formed of, for example, at least one of an optical disk such as a CD-ROM (Compact Disc ROM), a hard disk drive, a flexible disk, a magneto-optical disk (for example, a compact disk, a digital versatile disk, and a Blu-ray (registered trademark) disk), a smart card, a flash memory (for example, a card, a stick, and a key drive), a floppy (registered trademark) disk, and a magnetic strip, etc. The above-described storage medium may be, for example, a database including at least one of the storage device 1002 and the auxiliary storage device 1003, a server, or another appropriate medium.

The communication device 1004 is hardware (transmission/reception device) for performing communication between computers via at least one of a wired network and a wireless network, and is also referred to as a network device, a network controller, a network card, and a communication module, etc., for example. The communication device 1004 may be configured by including a high-frequency switch, a duplexer, a filter, a frequency synthesizer, etc., in order to implement at least one of frequency division duplex (FDD) and time division duplex (TDD). For example, a transmission/reception antenna, an amplifier unit, a transmission/reception unit, and a transmission line interface, etc., may be implemented by the communication device 1004. In the transmission/reception unit, the transmission unit and the reception unit may be physically or logically separated from each other.

The input device 1005 is an input device (for example, a keyboard, a mouse, a microphone, a switch, a button, and a sensor, etc.) that accepts input from the outside. The output device 1006 is an output device (for example, a display, a speaker, and an LED lamp, etc.) that performs output to the outside. Note that the input device 1005 and the output device 1006 may be integrated (for example, a touch panel).

Furthermore, the respective devices such as the processor 1001 and the storage device 1002 are connected by the bus 1007 for communicating information. The bus 1007 may be formed of a single bus or may be formed by using different buses between the devices.

Furthermore, the base station 10 and the terminal 20 may include hardware such as a microprocessor, a digital signal processor (DSP), an application specific integrated circuit (ASIC), a programmable logic device (PLD), and a field programmable gate array (FPGA), and a part of or all of the functional blocks may be implemented by the hardware. For example, the processor 1001 may be implemented by using at least one of these hardware elements.

### (Overview of embodiment)

As described above, according to the embodiment of the present invention, there is provided a terminal including: a reception unit configured to monitor a search space of a downlink control channel; and a control unit configured to switch from a first search space to a second search space upon detection of the downlink control channel, and switch from the second search space to the first search space upon determining that a signal transmission by a base station is completed, wherein a period of a time domain of the second search space is longer than that of the first search space.

In accordance with the configuration described above, the terminal 20 can monitor the PDCCH by switching the search space having a different monitoring period depending on the communication situation. That is, in NR-U, high frequency utilization efficiency and power consumption reduction are realized for each of the terminal 20 to which the GC-PDCCH is configured and the terminal 20 to which the GC-PDCCH is not configured. That is, in the wireless communication system, it is possible to efficiently perform monitoring by switching the search space.

When presence of transmission of a group common downlink control channel is configured by upper layer signaling received by the reception unit, the control unit may determine that the COT is completed based on the downlink control information received via the group common downlink control channel. According to this configuration, the terminal 20 can efficiently perform monitoring by switching the search space.

When absence of transmission of a group common downlink control channel is configured by upper layer signaling received by the reception unit or when a configuration relating to transmission of a group common downlink control channel is not configured, the control unit may determine that the signal transmission by the base station is completed upon failing to detect the downlink control channel or upon failing to detect a reference signal for demodulation of the downlink control channel. According to this configuration, the terminal 20 can efficiently perform monitoring by switching the search space.

When absence of transmission of a group common downlink control channel is configured by upper layer signaling received by the reception unit or when a configuration relating to transmission of a group common downlink control channel is not configured, the control unit may start a timer, upon failing to detect the downlink control channel or upon failing to detect a reference signal for demodulation of the downlink control channel, and determine that the signal transmission by the base station is completed when the timer expires. According to this configuration, the terminal 20 can efficiently perform monitoring by switching the search space.

The control unit may indicate supporting of switching of search space as UE capability. According to this configuration, the terminal 20 can indicate, to the base station 10, the capability of switching the search space.

Also, according to the embodiment of the present invention, there is provided a communication method that is executed by a terminal and that includes: monitoring a search space of a downlink control channel; and switching from a first search space to a second search space upon detection of the downlink control channel, and switching from the second search space to the first search space upon determining that a signal transmission of a base station is completed, wherein a period of a time domain of the second search space is longer than that of the first search space.

In accordance with the configuration described above, the terminal 20 can monitor the PDCCH by switching the search space having a different monitoring period depending on the communication situation. That is, in NR-U, high frequency utilization efficiency and power consumption reduction are realized for each of the terminal 20 to which the GC-PDCCH is configured and the terminal 20 to which the GC-PDCCH is not configured. That is, in the wireless communication system, it is possible to efficiently perform monitoring by switching the search space.

### (Supplement of embodiment)

The embodiment of the present invention is described above; however the disclosed invention is not limited to the embodiment, and a person ordinarily skilled in the art will appreciate various variations, modifications, alternatives, replacements, and so forth. Specific examples of numerical values are used in the description in order to facilitate understanding of the invention. However, these numerical values are merely an example, and any other appropriate values may be used, except as indicated otherwise. The separations of the items in the above description are not essential to the present invention. Depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. The order of the processes in each of the processing procedures described in the embodiment may be re-arranged, provided that they do not contradict. For the convenience of description, the base station 10 and the terminal 20 are described by using the functional block diagrams; however, such devices may be implemented in hardware, software, or combinations thereof. The software to be executed by the processor included in the base station 10 in accordance with the embodiment of the present invention and the software to be executed by the processor included in the terminal 20 in accordance with the embodiment of the present invention may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so forth.

Indication of information is not limited to the aspect or embodiment described in this disclosure and may be given by using any other method. For example, the notification of information may be given physical layer signaling (for example, Downlink Control Information (DCI), uplink control information (UCI)), higher layer signaling (for example, radio resource control (RRC) signaling, medium access control (MAC) signaling, broadcast information (master information block (MIB), system information block (SIB))), other signals, or a combination thereof. Further, the RRC signaling may be referred to as an "RRC message" and may be, for example, an RRC connection setup message, an RRC connection reconfiguration message, etc.

Each aspect and embodiment described in this disclosure is applicable to at least one of LTE, LTE-A, SUPER 3G, IMT-Advanced, 4G (4th generation mobile communication system), 5G (5th generation mobile communication system), NR(new Radio), future radio access (FRA), NR (New Radio), W-CDMA (registered trademark), GSM (registered trademark), CDMA2000, ultra-mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), and systems using any other appropriate systems and next generation systems expanded on the basis of the systems. Furthermore, each aspect and embodiment described in this disclosure may be applied to a combination of a plurality of systems (for example, a combination of at least one of LTE and LTE-A, and 5G, etc.)

The processing procedures, the sequences, the flowcharts, etc., of the respective aspects/embodiments described in this specification may be reversed in order unless there is a contradiction. For example, the method described in this disclosure presents elements of various steps in an exemplary order and is not limited to a presented specific order.

In the present specification, a specific action that is supposed to be performed by the base station 10 may be performed by an upper node in some cases. In the network configured with one or a plurality of network nodes including the base station 10, various actions performed for communication with the terminal 20 can be obviously performed by at least one of the base station 10 and any network node (for example, an MME or an S-GW, etc., is considered, but it is not limited thereto) other than the base station 10. The example in which the number of network nodes excluding the base station 10 is one has been described above, but the other network nodes may be a combination of a plurality of other network nodes (for example, an MME and an S-GW).

Information or signals, etc., described in the present disclosure can be output from the higher layer (or the lower layer) to the lower layer (or the higher layer). Information, etc., may be input/output via a plurality of network nodes.

Input and output information, etc., may be stored in a specific place (for example, a memory) or may be managed by using a management table. Input and output information, etc., may be overwritten, updated, or additionally written. Output information, etc., may be deleted. Input information, etc., may be transmitted to another device.

The determination according to the present disclosure may be performed in accordance with a value (0 or 1) indicated by one bit, may be performed in accordance with a Boolean value (true or false), or may be performed by a comparison of numerical values (for example, a comparison with a value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, etc., regardless of whether software is called software, firmware, middleware, a microcode, a hardware description language, or any other name.

Further, software, commands, information, etc., may be transmitted and received via a transmission medium. For example, when software is transmitted from a web site, a server, or any other remote source using at least one of a wired technology (a coaxial cable, a fiber optic cable, a twisted pair, or a digital subscriber line (DSL), etc.) and a wireless technology (infrared rays or a microwave, etc.), at least one of the wired technology and the wireless technology is included in a definition of a transmission medium.

Information, signals, etc., described in the present disclosure may be indicated using any one of a variety of different techniques. For example, data, instructions, commands, information, signals, bits, symbols, chips, etc., which are mentioned throughout the above description may be indicated by voltages, currents, electromagnetic waves, magnetic particles, optical fields or photons, or an arbitrary combination thereof.

The terms described in this disclosure and terms necessary for understanding this specification may be replaced with terms having the same or similar meanings. For example, at least one of a channel and a symbol may be a signal (signaling). Further, a signal may be a message. Further, a component carrier (CC) may be referred to as a "carrier frequency," a "cell," or a "frequency carrier", etc.

The terms "system" and "network" used in the present disclosure are used interchangeably.

Further, information, parameters, etc., described in the present disclosure may be indicated by using absolute values, may be indicated by using relative values from predetermined values, or may be indicated by using corresponding other information. For example, radio resources may be those indicated by an index.

The names used for the above-described parameters are not limited in any respect. Further, mathematical formulas, etc., using the parameters may be different from those explicitly disclosed in the present disclosure. Since various channels (for example, the PUCCH, the PDCCH, etc.) and information elements, etc., can be identified by suitable names, the various names allocated to the various channels and the information elements are not limited in any respect.

In the present disclosure, the terms "base station," "radio base station," "base station apparatus," "fixed station," "Node B," "eNodeB (eNB)," "gNodeB (gNB)," "access point," "transmission point," "reception point," "transmission/reception point," "cell," "sector," "sector group," "carrier," "component carrier" can be used interchangeably. The base station is also referred to as a macro cell, a small cell, a Femto cell, a pico cell, etc.

The base station can accommodate one or more (for example, three) cells. When the base station accommodates a plurality of cells, the entire coverage area of the base station can be divided into a plurality of smaller areas, and each smaller area can provide communication service through a base station subsystem (for example, a small indoor base station remote radio head (RRH)). The term "cell" or "sector" refers to part or all of the coverage area of at least one of the base station and the base station subsystem that performs communication service in the coverage.

In the present disclosure, terms such as "MS: Mobile Station", "user terminal", "UE: User Equipment", and "terminal", etc., can be used interchangeably.

The mobile station is also referred to as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission device, a reception device, a communication device, etc. Note that at least one of the base station and the mobile station may be a device mounted on a mobile body, the mobile body itself, etc. The mobile body may be a vehicle (for example, a car, an airplane, etc.), a mobile body that moves unmanned (for example, a drone, an automatically driven vehicle, etc.), or a robot (manned type or unmanned type). Note that at least one of the base station and the mobile station also includes a device which does not necessarily move during the communication operation. For example, at least one of the base station and the mobile station may be an IoT (Internet of Things) device such as a sensor.

Furthermore, the base station in the present disclosure may be read as a user terminal. For example, the communication between the base station and the user terminal is replaced with communication (for example, may be referred to as D2D (Device-to-Device), V2X (Vehicle-to-Everything)) between a plurality of the terminals 20, and each aspect/embodiment of the present disclosure may be applied to the configuration after replacement. In this case, the terminal 20 may have the functions of the base station 10 described above. Furthermore, terms such as "uplink" and "downlink" may also be read as terms corresponding to inter-terminal communication (for example, "side"). For example, uplink channels, downlink channels, etc., may be read as side channels.

Similarly, the user terminal in the present disclosure may be read as a base station. In this case, the base station may include the functions of the above-described user terminal.

In some cases, the terms "determining" and "deciding" used in the disclosure include various operations. The terms "determining" and "deciding" can include, for example, "determination" and "decision" for judging, calculating, computing, processing, deriving, investigating, looking-up, or search inquiry (for example, looking-up in a table, a database, or other data structures), and ascertaining operations. Further, the terms "determining" and "judging" can include "determination" and "decision" for receiving (for example, information reception), transmitting (for example, information transmission), input, output, and accessing (for example, accessing data in a memory) operations. The terms "determining" and "judging" can include "determination" and "decision" for resolving, selecting, choosing, establishing, and comparing operations. That is, the terms "determining" and "judging" can include "determination" and "decision" for any operation. Furthermore, "determining (deciding)" may be read as "assuming", "expecting", and "considering".

The terms "connected" and "coupled" or all of the modifications of the terms mean all of direct and indirect connections or couplings between two or more elements and can include a case in which one or more intermediate elements are present between two "connected" or "coupled" elements. The coupling or connection between elements may be physical coupling or connection, logical coupling or connection, or a combination thereof. For example, "connect" may be read as "access". In the disclosure, it can be considered that two elements are "connected" or "coupled" to each other by using one or more electric wires, at least one of a cable and a printed electrical connection and by using electromagnetic energy with a wavelength in a radio frequency domain, a microwave domain, and an optical (both visible and invisible) domain as some non-restrictive and incomprehensive examples.

The reference signal can be abbreviated to RS and may be called a pilot signal according to the standard to be applied.

In the present disclosure, the term "on the basis of" used in the specification does not mean "on the basis of only" unless otherwise stated. In other words, the term "on the basis of" means both "on the basis of only" and "on the basis of at least".

In the present disclosure, any reference to elements with the names "first" and "second" used in the specification does not generally limit the number of elements or the order of the elements. These names can be used as a convenient method for distinguishing two or more elements in the disclosure. Therefore, a reference to the first and second elements does not mean that only two elements can be used or that the first element needs to precede the second element in some form.

The term "means" in the structure of each of the above-mentioned devices may be substituted with, for example, a "unit", a "circuit", or a "device".

In the present disclosure, when "include," "including," and modifications thereof are used, these terms are intended to be inclusive, similarly to the term "comprising". Further, the term "or" used in the present disclosure does not mean exclusive OR.

The radio frame may be formed of one or more frames in the time domain. In the time domain, each of the one or more frames may be referred to as a subframe. The subframe may further include one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), a number of symbols per TTI, a radio frame configuration, a particular filtering process performed in the frequency domain by the transceiver, a specific windowing process performed in the time domain by the transceiver, etc.

A slot may be formed of one or more symbols (OFDM (Orthogonal Frequency Division Multiplexing) symbol, SC-FDMA (Single Carrier Frequency Division Multiple Access) symbol, etc.) in the time domain. The slot may be a time unit based on the numerology.

A slot may include a plurality of minislots. Each minislot may be formed of one or more symbols in the time domain. Furthermore, the minislot may be referred to as a subslot. A minislot may be formed of fewer symbols than a slot. The PDSCH (or PUSCH) transmitted in units of time greater than the minislots, may be referred to as PDSCH (or PUSCH) mapping type A. The PDSCH (or PUSCH) transmitted using minislots may be referred to as PDSCH (or PUSCH) mapping type B.

Radio frames, subframes, slots, minislots, and symbols all represent time units for transmitting signals. Radio frames, subframes, slots, minislots, and symbols may respectively be referred to by different names.

For example, one subframe may be referred to as a transmission time interval (TTI), or a plurality of consecutive subframes may be referred to as a TTI, or one slot or one minislot may be referred to as a TTI. That is, at least one of a subframe and TTI may be a subframe (1 ms) in existing LTE, a period shorter than 1 ms (for example, 1-13 symbols), or a period longer than 1 ms. Note that the unit representing TTI may be referred to as a slot, a minislot, etc., instead of a subframe.

Here, the TTI refers to the minimum time unit of scheduling in radio communication, for example. For example, in the LTE system, the base station performs scheduling for allocating radio resources (frequency bandwidth, transmission power, etc., that can be used in each terminal 20) in units of TTIs, to each terminal 20. Note that the definition of TTI is not limited as such.

The TTI may be a transmission time unit such as a channel coded data packet (transport block), a code block, a codeword, etc., or may be a processing unit such as scheduling, link adaptation, etc. Note that when a TTI is given, a time interval (for example, the number of symbols) in which a transport block, a code block, a code word, etc., is actually mapped, may be shorter than the TTI.

Note that when one slot or one minislot is referred to as a TTI, one or more TTIs (i.e., one or more slots or one or more minislots) may be the minimum time unit of scheduling. Also, the number of slots (the number of minislots) constituting the minimum time unit of the scheduling, may be controlled.

A TTI having a time length of 1 ms may be referred to as a regular TTI (TTI in LTE Rel. 8-12), a normal TTI, a long TTI, a regular subframe, a normal subframe, a long subframe, a slot, etc. A TTI shorter than the regular TTI may be referred to as a reduced TTI, a short TTI, a partial or fractional TTI, a reduced subframe, a short subframe, a minislot, a subslot, a slot, etc.

Note that a long TTI (for example, a regular TTI, a subframe, etc.) may be read as a TTI having a time length exceeding 1 ms, and a short TTI (for example, a reduced TTI, etc.) may be read as a TTI having a TTI length that is less than the TTI length of the long TTI and greater than or equal to 1 ms.

The resource block (RB) is a resource allocation unit in the time domain and the frequency domain, and may include one or more consecutive subcarriers in the frequency domain. The number of subcarriers included in the RB may be the same irrespective of the numerology, for example, the number may be 12. The number of subcarriers included in the RB may be determined based on the numerology.

Furthermore, the time domain of the RB may include one or more symbols, and may have a length of one slot, one minislot, one subframe, or one TTI. Each TTI, each subframe, etc., may be formed of one or more resource blocks.

Note that one or more RBs may be referred to as a physical resource block (PRB), a subcarrier group (SCG: Sub-Carrier Group), a resource element group (REG: Resource Element Group), a PRB pair, and an RB pair, etc.

Furthermore, the resource block may be formed of one or more resource elements (RE). For example, the one RE may be a radio resource area of one subcarrier and one symbol.

A bandwidth part (BWP) (which may be referred to as partial bandwidth) may represent a subset of consecutive common resource blocks (RBs) for a certain numerology, in a certain carrier. Here, the common RB may be identified by the index of the RB based on the common reference point of the carrier. The PRB may be defined by a certain BWP and numbered in the BWP.

The BWP may include BWP for UL (UL BWP) and BWP for DL (DL BWP). For the UE, one or more BWPs may be configured within one carrier.

At least one of the configured BWPs may be active, and the UE does not have to assume transmitting and receiving predetermined signals/channels outside of the active BWP. Note that a "cell", a "carrier", etc., in the present disclosure may be read as "BWP".

Structures such as the radio frames, subframes, slots, minislots, and symbols described above are merely illustrative. For example, configurations such as the number of subframes included in the radio frame, the number of slots per subframe or radio frame, the number of minislots included in the slot, the number of symbols and RBs included in the slot or minislot, the number of subcarriers included in the RB, the number of symbols in the TTI, the symbol length, the cyclic prefix (CP) length, etc., may be variously changed.

In the present disclosure, if an article is added by translation, such as a, an, the, etc., in English, the present disclosure may include a case where the noun following the article is plural.

In the present disclosure, the term "A and B are different" may mean "A and B are different from each other". Note that this term may mean "A and B are each different from C". Terms such as "separated", "coupled", etc., may also be interpreted in the same manner as "different".

Each aspect/embodiment described in the present disclosure may be used singly or in combination, or may be used by being switched in accordance with the execution. Furthermore, indication of predetermined information (for example, indication of "being X") is not limited to indicating explicitly; this may be done implicitly (for example, not indicating the predetermined information).

In the present disclosure, "period" may be, in English, "periodicity", "period", "cyclic", "cycle", or "pitch".

It should be noted that in the present disclosure, PDCCH is an example of a downlink control channel. DMRS is an example of a reference signal for demodulation.

Although the present disclosure has been described in detail above, it will be obvious to those skilled in the art that the present disclosure is not limited to the embodiments described herein. The present disclosure can be implemented as modifications and variations without departing from the spirit and scope of the present disclosure as defined by the scope of the claims. Therefore, the description of the present disclosure is for the purpose of illustration and does not have any restrictive meaning to the present disclosure.

### [Reference Signs List]

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 30: core network
- 1001: processor
- 1002: storage device
- 1003: auxiliary storage device
- 1004: communication device
- 1005: input device
- 1006: output device

## Claims

1. A terminal comprising:
a reception unit configured to monitor a search space of a downlink control channel; and
a control unit configured to switch from a first search space to a second search space upon detection of the downlink control channel, and switch from the second search space to the first search space upon determining that a signal transmission by a base station is completed,
wherein a period of a time domain of the second search space is longer than that of the first search space.

2. The terminal according to claim 1, wherein, when presence of transmission of a group common downlink control channel is configured by upper layer signaling received by the reception unit, the control unit is configured to determine that the signal transmission by the base station is completed based on downlink control information received via the group common downlink control channel.

3. The terminal according to claim 1, wherein, when absence of transmission of a group common downlink control channel is configured by upper layer signaling received by the reception unit or when a configuration relating to transmission of the group common downlink control channel is not configured, the control unit is configured to determine that the signal transmission by the base station is completed when the reception unit fails to detect the downlink control channel or fails to detect a reference signal for demodulation of the downlink control channel.

4. The terminal according to claim 3, wherein when absence of transmission of a group common downlink control channel is configured by upper layer signaling received by the reception unit or when a configuration relating to transmission of the group common downlink control channel is not configured, the control unit is configured to start a timer upon failing to detect the downlink control channel or upon failing to detect a reference signal for demodulation of the downlink control channel, and determine that the signal transmission by the base station is completed when the timer expires.

5. The terminal according to claim 1, wherein, the control unit indicates supporting of switching of search space as a UE capability.

6. A communication method executed by a terminal, the communication method comprising:
monitoring a search space of a downlink control channel; and
switching from a first search space to a second search space upon detection of the downlink control channel, and switching from the second search space to the first search space upon determining that a signal transmission by a base station is completed,
wherein a period of a time domain of the second search space is longer than that of the first search space.
